# EUROPEAN PATENT SPECIFICATION

(11) **EP 3 261 453 B1**
(45) Date of publication and mention of the grant of the patent: **24.10.2018**
(21) Application number: 16715861.7
(22) Date of filing: 18.02.2016
(51) Int. Cl.: A23J 3/04, A23J 1/09, A23B 5/005, A23B 5/01

(54) **PROCESS FOR TREATMENT OF LIQUID EGG WHITE**
VERFAHREN ZUR BEHANDLUNG VON FLÜSSIGEM EIWEISS
PROCÉDÉ DE TRAITEMENT DU BLANC D' OEUF LIQUIDE

(30) Priority: 23.02.2015 IT RA20150002
(43) Date of publication of application: 03.01.2018
(73) Proprietor: Interovo Egg Group B.V., 4051 CG Ochten (NL)
(72) Inventor: DI CARLO, Francesca, 48121 Ravenna (RA) (IT)
(74) Representative: Vigand, Philippe
(86) International application number: PCT/IB2016/000158
(87) International publication number: WO 2016/135547

(56) References cited:
- BE-A6- 1 005 856
- CA-A1- 1 169 287
- FR-A1- 2 972 331
- GB-A- 2 191 077
- JOSHUA B GURTLER, DONALD E CONNER: "Survival and Growth of Salmonella Enteritidis in Liquid Egg Products Varying by Temperature, Product Composition and Carbon Dioxide Concentration", FOODBORNE PATHOGENS AND DISEASE, vol. 6, no. 5, 2009, pages 561-567, XP002745210,

## Description

The present invention relates to a process for the industrial production of liquid egg white from hen's egg.

The invention is advantageously applied in the field of egg products for the general public and distribution for example in supermarkets, hypermarkets etc., or by specialized distributors for specific applications such as protein supplements for athletes, sport-loving people and similar or baby food.

Generally, the albumen market, also commonly called "egg white" or simply "white" has recently shown a significant increase in demand making up the price of four times over the last few months.

Fashion diets, low in cholesterol, have revolutionized the internal hierarchies of this industry where liquid yolk has been considered for a long time the noble and valuable egg compound and looking at the egg albumen as a waste product.

This is why yolk has been always sold at high prices unlike the white.

Various techniques have already been proposed to manufacture and supply liquid egg white with storage characteristics and excellent functional properties suitable to the best applications in baking such as meringues, souffles, mousses, etc.

For example, the patent document US 6210740 (LIOT) proposes to apply a special treatment Albumen in a tank, with a slow increase in temperature (from 30 to 240 minutes) which is maintained between 40 ° and 48 ° for several days. The product obtained is then placed in sealed containers to be marketed.

The effectiveness of this production system relies solely on the basis of the natural characteristics of the egg white content, in particular the presence, among others, of the conalbumin or ovotransferrin and lysozyme proteins.

Conalbumin or ovotransferrin has a clear meaning in the albumen which is to bind tenaciously metal ions (Fe, Cu, Mn, Zn) thereby reducing the amount available free of bacteria for their multiplication.

Lysozyme instead has the property to lyse the cell wall of gram +, normally heat-resistant and generally not pathogens causing their death for osmoticshock, in the same time lysozyme has no effects against gram - normally heat sensitive most of them pathogenic such as Salmonella, Escherichia coli etc (International Egg Pasteurization Manual page 6).

Thus it appears that the temperatures of use may not be sufficient to obtain a product hygienically safe especially in the presence of pathogenic bacteria in lag phase.

It has been widely demonstrated that the pathogenic bacterium of reference for the industry of egg products, Salmonella Enteritidis, appears to be up to 10 times more heat resistant in the stationary phase (lag phase) than in the exponential growth phase (ICMSF n ° 6 / 2005).

This is the reason why in the US officially recognized method for the pasteurization of egg without the addition of chemical additives is of 56.7 ° C for 3.5 min or 55.6 °C for 6. 2 min. From the practical point of view the Liot system approach demonstrates statistically to have a default of 10 to 15% of non-compliant packaging and many times it has been necessary to recall the product from the market due to the presence of pathogenic bacteria (For. Ex. RASFF notification 2014.1647).

Furthermore, a so long treatment could impair some characteristics of the product making more difficult to obtain good whipping properties and a good stability of the foam for the manufacture of products such as chocolate mousse.

The purpose of the subject invention is to overcome the problems and the drawbacks of the prior art described above.

The object of this invention is to provide a process capable of allowing to obtain liquid egg white in microbiological conditions of sterility, in any type of aseptic packaging and with exceptional functional properties.

Another object of the present invention is to provide an optimal procedure able to eliminate most of the air dissolved in the liquid egg white making the oxygen not available for the growth of aerobic bacteria.

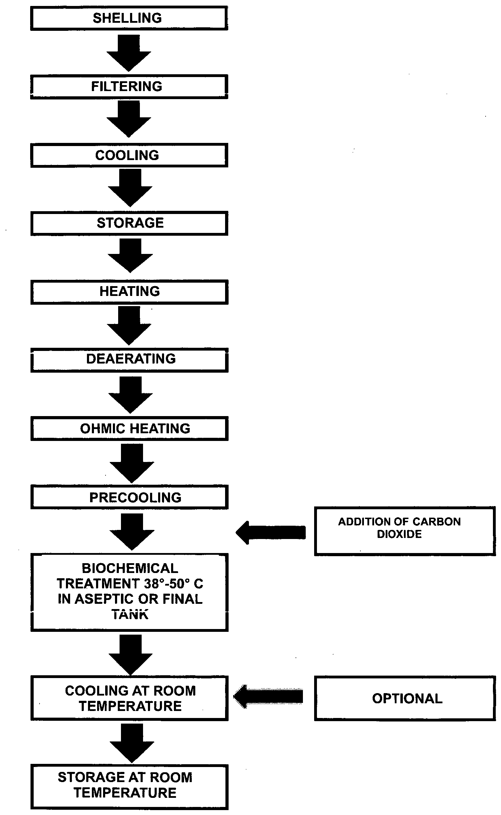

The structural and functional characteristics of the present invention and its advantages will become even more clear and evident from the claims below, and in particular from an examination of the description that follows, referring to the attached figure, which shows a preferred but not limited embodiment blocks scheme of the process for the industrial production of liquid egg white.

According to the enclosed block diagram , the liquid egg white production method allows to obtain liquid in microbiological conditions of sterility, in any type of aseptic packaging with exceptional functional properties.

The production process can be summarized in the following phases:
- Egg breaking obtaining liquid egg white and yolk plus a "minimum technical quantity" of whole egg;
- Filtration and immediate cooling to a temperature in the range between 0 °C and 4 °C which is followed by storage in closed tank, stirred, refrigerated and insulated to maintain said temperature range;
- Thermal pasteurization at 54-57 °C for 2.5-3 min of liquid egg white as soon as possible, in any case within 48 hours from breaking, and also including the steps of deaeration by a vacuum system, preferably using a ohmic heater in the last phase of temperature increase;
- Carbon dioxide addition at the end of the heat treatment reaching a pH of 7.6-8.5 and fast precooling at 38-50 C°
- Biochemical treatment at constant controlled temperature conditions (38-50 C°) in the aseptic storage tank followed by or directly in the final packaging for a time between 6 and 48 hours
- Natural cooling and final storage at room temperature.

The process is therefore characterized by a short standard heat pasteurization, preferably using an ohmic heater for raising the final temperature, and including the deaeration of the product by vacuum of about -0.25 / -0. 5 bar.

The microorganisms heating inactivation is an exponential inactivation process, microbes reduction increases increasing temperature treatment as well, this must be done taking care of specific characteristics of the albumen and / or the residence time of the liquid at a given temperature (Pflug and Schmidt, 1968).

It must not be underestimated the modification of the thermal sensitivity of pathogenic bacteria induced by the increase in fat content and total solids and, of all the egg fractions, the egg white is the most protected from microbial contamination but also the most heat sensitive (Garibaldi 1960).

In the egg industry, bacteria are classified into two main families: Enterobacteriaceae (mainly pathogenic, gram - and heat-sensitive) and mesophilic aerobic bacteria (mainly degenerative, non-pathogenic gram-heat resistant).

This classification can be extended searching others bacterial strains.

The present invention therefore suggests a treatment at 54-57 °C for 2.5-3 min allowing a significant bacterial decontamination performance and in the same time keeps inalterating the natural characteristics of the albumen in particular conalbumin and lysozyme.

This is a matter of particular importance to enable to get a good result in the following biochemical treatment and, not least, recognized as the most effective by the US guidelines. Through a heat treatment of this entity it is possible to inactivate all the enterobacteriacea flora and up to 99.99% of the mesophilic aerobic flora.

The literature reports that normal bacteria surviving thermal pasteurization are mainly Micrococcus and Streptococcus Faecalis (Egg Science and Technology p. 295-296) as well as the "legendary" Bacillus cereus which is one of the few pathogenic gram-positive, spore-forming and psychrophilic aerobic bacteria.

From the above it is clear that a first advantage of this innovative process of the present invention relates to the air removal from the liquid egg white making the dissolved oxygen is not available for the growth of aerobic bacteria.

Both aerobic micrococci and Cereus are aerobic while Streptococchi Faecalis prefer growth in the presence of oxygen, but can also grow in anaerobic environment albeit with a greatly reduced susceptibility.

As reported, for example, in patent document US3404008, subjecting the product to a deaeration under vacuum, at constant pasteurisation temperature, the killing microbial general is higher while at the same time reduces the coagulating effect of the product on the surface of the heat exchangers.

The use of an ohmic heater for increasing the final temperature, with the same process parameters, is shown to be particularly effective because it combines two different inactivation technologies and thus preferred to a classic system to the heat exchange surface. Generally heating using an ohmic heating device is advantageous from a point of view of the optimization of the initial investment presenting a higher efficiency than conventional systems and maintenance costs very reduced due to the almost absence of moving parts.

As just disclosed, the microbial inactivation is mainly due to a thermal effect of the system but in addition to this it has been found a microbicidal effect due to the application of the electric field directly to the liquid food.

All living cells, both Prokaryote Eukaryotic that contain a cell membrane constituted by lipids and proteins.

Prokaryote cells, which includes the bacteria of interest for the present invention, have an additional layer outside, known as "double phospholipid membrane", that subjected to a high voltage used by the system of ohmic heating creates breakpoints or "pores" and damaging it (Destinee R. Anderson 2003).

This effect known as "electroporation" is caused by the electric field of the cell membrane in physiological conditions, by altering the transport functions through the same: it opens in this way channels that can lead to death the bacterial cell or causing irreversible damages.

The egg white so heat-treated on the basis of the above relationship of time-temperature, undergoes to a first cooling step to a temperature of about 54-57 °C to 38-50 °C to be subsequently subjected to treatment called "biochemical", detailed description of which follows.

The effectiveness of this innovative methodology relies exclusively on the basis of the natural characteristics that the egg white presents, in particular the presence of conalbumin or ovotransferrin and lysozyme.

As already explained the first protein has the ability to bind tenaciously metal ions (Fe, Cu, Mn, Zn) thus reducing the free quota to the bacteria for their multiplication.

The second protein instead has the property to lyse the cell wall of gram +, normally heat-resistant and generally not pathogens causing their death for osmotic shock but acts with little or almost no effect on gram - normally thermolabile and which comprises mainly pathogenic microorganisms, Salmonella and Escherichia Coli including (International Egg Pasteurization Manual p.6) which, at this point, were totally killed by the previous thermal pasteurization step.

The lysozyme activity, like most of the biochemical processes, is highly dependent on environmental conditions such as pH, ionic strength of the matrix in which it is contained, temperature etc. (Keener et al. 2009).

It is important to underline that, under a thermal point of view, these two proteins are not minimally denatured and damaged by the first pasteurization process step because their denaturing temperatures are respectively of 61 and 75 ° C for conalbumin and lysozyme (International Egg Pasteurization manual).

The temperature range of 38-50 ° C tends to simulate the body temperature of the hen that turns out to be an average of 40-42 °C depending on the time of day, the conditions of plumage (during moulting or less), activities that the hen is doing at that moment and time of day ((WorldPoultry art. 03/29/2010).

This like natural thermal condition acts, therefore, as a catalyst for the action of these two proteins activating and enhancing their microbial activity, mainly of lysozyme against gram-positive bacteria or those who survived the heat treatment process.

In this step it is very important carbon dioxide addition (CO₂) to further improve the microbicidal effects of lysozyme and to increase the functional properties of the albumen.

A freshly laid egg albumen is full saturated with carbon dioxide with a pH ranging from 7.6 to 8.5 and a quantity of CO₂ of about 0.15 mg / g of egg white.

However after a few days, the pH value rises to 9 and 9.3 due to the outside lost of carbon dioxide through the shell.

Whereas the egg white contains about 89% water, this pH change is justified by the following reaction with production of carbonic acid: CO₂ + H₂O = H₂CO₃ and consequently bringing the albumen to more acidic pH values.

It has been demonstrated that at pH 8, for a temperature range between 5 and 22 °C, the addition of carbon dioxide results in an increase of the lysozyme lytic activity from 155 to 138% higher, respectively, demonstrating that the CO₂ interacting with the lysozyme creates a synergistic effect.

These results suggest that the addition of carbon dioxide and lower pH to values equal to those of the egg just laid (average value equal to 8) increases the activity of lysozyme in the white and consequently increasing the lytic activity, and the bactericidal effect (Keener et. al. 2009, Banerjee et al. 2011).

The "biochemical" treatment so described may be brought to completion in an aseptic tank which is followed by packaging under sterile conditions, or carried out directly in the final packaging.

In both solutions it is important that the final package is protected from light, with a full oxygen barrier outdoor, carried out under sterile conditions like Tetra Pak Packaging Aseptic® material and filling system.

Another aspect to be highlighted is the right time of CO₂ addition that must be implemented at the end of the pasteurization heat treatment that is before, or concurrently, the pre-cooling.

This must be strictly respected in order to avoid an increase in the heat resistance of bacteria Salmonellae spp. including (Egg Science and Technology p. 297) that occurs increasing the pH. In summary, it can be argued that adding liquid egg white with carbon dioxide reaching a pH value between 7.6 and 8.5 restores the natural conditions of the immune defense and property of freshly laid egg.

pH correction gains also a secondary effect.

It is possible to imagine single egg white proteins as wool halls suspended in an ocean of water (the ratio is roughly 1000 water molecules to a protein).

When mounting in planetary partially denatured proteins gather around the air bubbles, stabilizing them: hydrophobic areas are turning to the air and the hydrophilic towards the water.

Acid addition helps whipping functionality because it allows proteins negatively charged to approach.

The final volume increases as well as foam stability and this allows the heat to penetrate and cause protein coagulation during cooking without the collapse of the air bubbles.

Furthermore it helps to keep the foam white because it captures metal ions present, which, would do the coloring forming reacting with conalbumin (Bressanini in "The Science of Pastry" 2014).

The EU Regulation N° 1129/2011 Part E p. 33 recognizes carbon dioxide as a food additive by identifying it with the code E 290 and allows its use in all food categories regardless of dosage. According to the European Directive 95/2 / EC this application can be declared as MAP (Modified Atmosphere Packaging) or modified atmosphere packaging.

This defines a packaging technology that, thanks to the replacement of air with a gas mixture, allows to increase the shelf-life (shelf life) of food products, in particular of those perishable.

In this case the gas used, carbon dioxide, is defined as a "packaging gases" or one of the "gases other than air, introduced into a container before, during or after the placing in that container a food product" .

Other additives are not permitted in the EU but in other countries, including the USA, is allowed EDTA or other chelating-sequestering chemicals, the addition of which has been shown to have sterilizing effects in particular at ambient temperature for which should be expected in use conjunction with the present invention greatly reducing the time of the biochemical treatment (Garibaldi et al. 1969).

This additive (EDTA) is classified by the FDA as GRAS (Generally Recognized As Safe N° 152, 178, 363) it can then be used in food.

At the end of the biochemical treatment of about 6-48 hours it can be useful and advantageous, but not strictly necessary, to cool the product at room temperature.

## Claims

1. Process for treatment of liquid egg white from chicken eggs or similar, comprising the steps of
shelling said eggs so as to get a specific quantity of liquid egg white;
filtering and immediately cooling said liquid egg white at a temperature in a range determined by keeping the said liquid inside a closed and agitated tank;
heat treating by pasteurization said liquid egg white within a determined time interval by said shelling step with deaeration of said liquid and with addition of carbon dioxide; and
performing a biochemical treatment of said liquid egg white in conditions of controlled temperature within a sterile tank with subsequent final storage at room temperature;
**characterized in that**
said step of heat treatment is carried out at a temperature of 54 - 57° Celsius for about 2.5 - 3 minutes; and
said step of biochemical treatment comprises a step of stationing of said liquid egg white to a temperature between 38 and 50° Celsius for a period of time between 6 and 48 hours within an aseptic tank or directly into a final packaging, with subsequent cooling to room temperature.

2. The process according to claim 1, **characterized in that** said step of heat treatment is carried out via an Ohmic heater.

3. Process according to claim 1 or 2 , **characterized in that** said filtering step is performed at a temperature between 0 and 4° Celsius.

4. Process according to one or more of the preceding claims 1 to 3, **characterized in that** said step of heat treatment is carried out within 48 hours after said shelling step.

5. Process according to one or more of the preceding claims 1 to 4, **characterized in that** said step of deaeration is carried out under vacuum at about -0.25 / -0.3 bar.

6. Process according to one or more of the preceding claims 1 to 5, **characterized in that** said stationing is made by adding CO₂ for the pH correction.

7. Process according to claim 6, wherein the pH correction is for achieving a pH value of 7.6 to 8.5.

## Patentansprüche

1. Verfahren zur Behandlung von flüssigem Eiweiß aus Hühnereiern oder dergleichen, umfassend die Schritte mit
Aufschlagen der Eier, um eine spezifische Menge von flüssigem Eiweiß zu erhalten;
Filtern und sofortiges Abkühlen des flüssigen Eiweißes bei einer Temperatur in einem Bereich, der durch Aufbewahren der Flüssigkeit in einem geschlossenen Behälter mit Umrühren bestimmt wird;
Wärmebehandlung durch Pasteurisierung des flüssigen Eiweißes innerhalb eines bestimmten Zeitintervalls durch den Aufschlagschritt mit Entlüftung der Flüssigkeit und unter Zusatz von Kohlendioxid; und
Durchführung einer biochemischen Behandlung des flüssigen Eiweißes bei kontrollierter Temperatur in einem sterilen Tank mit anschließender Endlagerung bei Raumtemperatur;
**dadurch gekennzeichnet,**
**dass** der Schritt der Wärmebehandlung bei einer Temperatur von 54 - 57 °Celsius für etwa 2,5 - 3 Minuten durchgeführt wird; und
der Schritt mit der biochemischen Behandlung einen Schritt der Stationierung des flüssigen Eiweißes auf eine Temperatur zwischen 38 und 50 °Celsius für einen Zeitraum zwischen 6 und 48 Stunden in einem aseptischen Tank oder direkt in eine Endverpackung mit anschließender Abkühlung auf Raumtemperatur umfasst.

2. Verfahren nach Anspruch 1, **dadurch gekennzeichnet, dass** der Schritt der Wärmebehandlung über ein ohmsches Heizgerät durchgeführt wird.

3. Verfahren nach Anspruch 1 oder 2, **dadurch gekennzeichnet, dass** der Filterungsschritt bei einer Temperatur zwischen 0 und 4 °Celsius durchgeführt wird.

4. Verfahren nach einem oder mehreren beliebigen der vorstehenden Ansprüche 1 bis 3, **dadurch gekennzeichnet, dass** der Schritt mit der Wärmebehandlung innerhalb von 48 Stunden nach dem Schritt mit dem Aufschlagen durchgeführt wird.

5. Verarbeitung nach einem oder mehreren beliebigen der vorstehenden Ansprüche 1 bis 4, **dadurch gekennzeichnet, dass** der Schritt mit der Entlüftung unter Vakuum bei etwa -0,25 / - 0,3 bar durchgeführt wird.

6. Verfahren nach einem oder mehreren beliebigen der vorstehenden Ansprüche 1 bis 5, **dadurch gekennzeichnet, dass** die Stationierung durch Zugabe von CO₂ für die pH-Korrektur erfolgt.

7. Verfahren nach Anspruch 6, wobei die pH-Korrektur zum Erreichen eines pH-Wertes von 7,6 bis 8,5 dient.

## Revendications

1. Procédé de traitement de blanc d'oeuf liquide provenant d'oeufs de poule ou autres, comprenant les étapes suivantes
casser lesdits oeufs de façon à obtenir une quantité spécifique de blanc d'oeuf liquide ;
filtrer et refroidir immédiatement ledit blanc d'oeuf liquide à une température dans une plage déterminée en maintenant ledit liquide à l'intérieur d'une cuve fermée et sous agitation ;
soumettre ledit blanc d'oeuf liquide à un traitement thermique par pasteurisation dans un intervalle de temps déterminé par ladite étape de cassage avec désaération dudit liquide et ajout de dioxyde de carbone ; et
appliquer un traitement biochimique audit blanc d'oeuf liquide dans des conditions de température contrôlée dans une cuve stérile avec stockage final ultérieur à température ambiante ;
**caractérisé en ce que**
ladite étape de traitement thermique est effectuée à une température de 54-57 °C pendant environ 2,5-3 minutes ; et
ladite étape de traitement biochimique comprend une étape de cantonnement dudit blanc d'oeuf liquide à une température comprise entre 38 et 50 °C pendant une période de temps comprise entre 6 et 48 heures dans une cuve aseptique ou directement dans un conditionnement final, avec refroidissement ultérieur à température ambiante.

2. Procédé selon la revendication 1, **caractérisé en ce que** ladite étape de traitement thermique est effectuée par le biais d'un chauffage ohmique.

3. Procédé selon la revendication 1 ou 2, **caractérisé en ce que** ladite étape de filtration est effectuée à une température comprise entre 0 et 4 °C.

4. Procédé selon une ou plusieurs des revendications 1 à 3 précédentes, **caractérisé en ce que** ladite étape de traitement thermique est effectuée dans les 48 heures après ladite étape de cassage.

5. Procédé selon une ou plusieurs des revendications 1 à 4 précédentes, **caractérisé en ce que** ladite étape de désaération est effectuée sous un vide d'environ -0,25/-0,3 bar.

6. Procédé selon une ou plusieurs des revendications 1 à 5 précédentes, **caractérisé en ce que** ledit cantonnement est effectué en ajoutant du CO₂ pour la correction du pH.

7. Procédé selon la revendication 6, dans lequel la correction du pH sert à obtenir une valeur de pH de 7,6 à 8,5.
